# EUROPEAN PATENT APPLICATION

(11) **EP 1 510 505 A1**
(43) Date of publication of application: **02.03.2005**
(21) Application number: 04020423.2
(22) Date of filing: 27.08.2004
(51) Int. Cl.: C03C 3/15, C03C 3/068

(54) **Precision press-molding glass preform, optical element and processes for the production thereof**

(30) Priority: 29.08.2003 JP 2003308028
(71) Applicant: Hoya Corporation, Shinjuku-ku, Tokyo 161-0032 (JP)
(72) Inventor: Hayashi, Kazutaka, Akishima-shi Tokyo 196-0025 (JP)
(74) Representative: HOFFMANN - EITLE

(57) **Abstract**

Provided is a precision press-molding glass preform, which is formed of a high-refractivity low-dispersion optical glass containing no PbO and which requires none of cutting and polishing of an optical-function surface after the precision press-molding is carried out, the optical glass containing, by mol%, 40 to 60 % of B₂O₃ exclusive of 40 %, 5 to 25 % of La₂O₃, 2 to 22 % of Gd₂O₃, 5 to 45 % of ZnO and 0 to 10 % of SiO₂ exclusive of 10 % as glass components but containing no PbO, wherein the ratio of the content of B₂O₃ to the total content of B₂O₃ and SiO₂ (B₂O₃/(B₂O₃+SiO₂)) is over 0.84 but not more than 1.00, and the ratio of the content of Gd₂O₃ to the total content of Gd₂O₃ and Nb₂O₅ as an optional component (Gd₂O₃/(Gd₂O₃+Nb₂O₅)) is over 0.91 but not more than 1.00, the optical glass having a refractive index (nd) of over 1.80 but not more than 2.00 and an Abbe's number (νd) of 40 to 45 exclusive of 45.

## Description

### Field of the Invention

The present invention relates to a precision press-molding glass preform, a process for the production of the glass preform, an optical element and a process for the production of the optical element. The present invention can be suitably applied, for example, to the production of an optical element such as an ultraprecision aspherical lens, an ultraprecision spherical lens, or the like.

### Related Art

In recent years, machines and devices using optical systems are rapidly enhanced in the degrees of integration and function together with the appearance of digital cameras. Under the circumstances, it is increasingly demanded to increase the accuracy of optical systems and decrease the weight and size thereof. Optical designs using aspherical lenses are coming to be a mainstream for coping with these demands.

For supplying a large amount of aspherical lenses made of high-functional glass having properties of high refractivity and low dispersion or properties of high refractivity and high dispersion stably at a low cost, the spotlight of attention is focused on a molding technique of forming an optical surface directly by precision press-molding without requiring the steps of cutting and polishing. At the same time, there are increasing demands for a high-functional optical glass suitable for the above molding technique.

In a precision press-molding method, a mold with a cavity having a predetermined form is provided and a glass molding intermediate (glass preform) is press-molded at a high temperature to obtain a glass molded product having the form and surface accuracy of an end product or the form and surface accuracy very close to an end product. The mold used for the precision press-molding is also exposed to a high temperature, and a high pressure is exerted thereon, so that there is caused damage on the mold itself or a mold release film formed on a molding surface of the mold. For suppressing the above damage on the mold or the mold release film, it is desired to decrease the glass transition temperature (Tg) and the sag temperature (Ts) of an optical glass for constituting a precision press-molding glass preform so that the Tg and Ts thereof are as low as possible.

As a high-refractivity and low-dispersion optical glass having a low glass transition temperature and a low sag temperature, there is known an optical glass containing PbO, etc., as essential components, as is disclosed, for example, in JP-A-3-50138.

The above optical glass has a problem that it is required to incorporate harmful PbO for increasing the refractive index thereof.

### Disclosure of the Invention

Under the circumstances, it is an object of the present invention to provide a precision press-molding glass preform, which contains no PbO, which has high-refractivity and low-dispersion properties, a low glass transition temperature and a low sag temperature, and which does not require machining processes such as cutting and polishing of an optical-function surface after the precision press-molding, a process for the production of the glass preform, an optical element obtained from the above glass preform, and a process for the production of the optical element.

For achieving the above object, the present inventor has made diligent studies and as a result has found a novel optical glass containing specific amounts of specific contents as essential component without containing PbO and having high-refractivity and low-dispersion properties. The present invention has been accordingly completed.

That is, the present invention provides;
(1) a precision press-molding glass preform, which is formed of an optical glass comprising, by mol%, 40 to 60 % of B₂O₃ exclusive of 40 %, 5 to 25 % of La₂O₃, 2 to 22 % of Gd₂O₃, 5 to 45 % of ZnO and 0 to 10 % of SiO₂ exclusive of 10 % as glass components but containing no PbO, wherein the ratio of the content of B₂O₃ to the total content of B₂O₃ and SiO₂ (B₂O₃/ (B₂O₃+SiO₂) ) is over 0. 84 but not more than 1.00, and the ratio of the content of Gd₂O₃ to the total content of Gd₂O₃ and Nb₂O₅ as an optional component (Gd₂O₃/(Gd₂O₃+Nb₂O₅)) is over 0.91 but not more than 1.00, the optical glass having a refractive index (nd) of over 1.80 but not more than 2.00 and an Abbe's number (vd) of 40 to 45 exclusive of 45,
(2) the precision press-molding glass preform as recited in the above (1), wherein the optical glass further contains, by mol%, 0.5 to 15 % of Li₂O, the total content of Li₂O and the ZnO being at least 10 %, 0.5 to 10 % of ZrO₂, 0.2 to 10 % of Ta₂O₅, 0 to 10 % of WO₃, 0 to 4 % of Y₂O₃ and 0 to 0.5 % of Yb₂O₃, and La₂O₃ and Gd₂O₃ have a total content of 12 % or more,
(3) the precision press-molding glass preform as recited in the above (1), wherein the ratio of the content of SiO₂ to the total content of B₂O₃ and SiO₂ (SiO₂/(B₂O₃+SiO₂)) is not less than 0 but less than 0.16, and the ratio of the content of Nb₂O₅ to the total content of Gd₂O₃ and Nb₂O₅ (Nb₂O₅/(Gd₂O₃+Nb₂O₅)) is not less than 0 but less than 0.09,
(4) the precision press-molding glass preform as recited in the above (1), wherein the optical glass has a glass transition temperature of 650°C or lower,
(5) the precision press-molding glass preform as recited in the above (1), wherein the optical glass has a viscosity of 4 to 40 dPa·s at a liquidus temperature thereof,
(6) the precision press-molding glass preform as recited in the above (1), which has all surfaces formed by solidification of the optical glass in a molten state,
(7) the precision press-molding glass preform as recited in the above (1), which has all surfaces formed of free surfaces,
(8) a process for producing the precision press-molding glass preform recited in the above (1), which comprises separating a molten glass gob having a predetermined weight from a molten glass and cooling the glass gob to produce the precision press-molding glass preform, the glass preform having a weight equivalent to the predetermined weight of the glass gob,
(9) the process for producing a precision press-molding glass preform as recited in the above (8), wherein the glass preform is shaped while the molten glass gob is caused to float by applying a gas pressure to the molten glass gob,
(10) an optical element that is a product obtained by heating the precision press-molding glass preform recited in the above (1) and precision-press-molding the glass preform,
(11) the optical element that is a product obtained by heating the precision press-molding glass preform produced by the process recited in the above (8) and precision-press-molding the glass preform,
(12) a process for producing an optical element, which comprises heating the precision press-molding glass preform recited in the above (1) and precision-press-molding the glass preform,
(13) a process for producing an optical element, which comprises heating the precision press-molding glass preform produced by the process recited in the above (8) and precision-press-molding the glass preform,
(14) the process for producing an optical element as recited in the above (12) or (13), wherein the precision press-molding glass preform is introduced into a press mold and the precision press-molding glass preform is heated together with the press mold and precision press-molded, and
(15) the process for producing an optical element as recited in the above (12) or (13), wherein the precision press-molding glass preform preheated to have a higher temperature than the press mold is introduced to the press mold and then precision press-molded.

### Effect of the Invention

According to the present invention, there can be provided a novel precision press-molding glass preform, which is formed of an optical glass having high-refractivity low-dispersion properties and having a low glass transition temperature (Tg) and a low sag temperature without containing PbO. When such preforms for precision press-molding are precision press-molded, optical elements having high-refractivity low-dispersion properties can be easily and efficiently produced without damaging a press mold and a mold release film provided on the surface of the press mold.

### Preferred Embodiments of the Invention

First, the precision press-molding glass preform (the glass preform for precision press-molding) provided by the present invention (to be sometime referred to as "glass preform of the present invention" will be explained below.

The glass preform of the present invention is formed of an optical glass having specific contents of specific components and having high-refractivity low-dispersion properties. That is, the glass preform of the present invention is characteristically formed of an optical glass comprising, by mol%, 40 to 60 % of B₂O₃ exclusive of 40 %, 5 to 25 % of La₂O₃, 2 to 22 % of Gd₂O₃, 5 to 45 % of ZnO and 0 to 10 % of SiO₂ exclusive of 10 % as glass components but contains no PbO, wherein the ratio of the content of B₂O₃ to the total content of B₂O₃ and SiO₂ (B₂O₃/ (B₂O₃+SiO₂)) is over 0.84 but not more than 1.00, and the ratio of the content of Gd₂O₃ to the total content of Gd₂O₃ and Nb₂O₅ as an optional component (Gd₂O₃/ (Gd₂O₃+Nb₂O₅)) is over 0.91 but not more than 1.00, the optical glass having a refractive index (nd) of over 1.80 but not more than 2.00 and an Abbe's number (vd) of 40 to 45 exclusive of 45.

Contents of components and total contents hereinafter will represent mol%, and ratios of components hereinafter will also represent molar ratios, unless otherwise specified.

B₂O₃ is an essential component and works as a glass network forming oxide. When high-refractivity components such as La₂O₃, Gd₂O₃, etc., are incorporated in a large amount, it is required to use B₂O₃ as a main glass network forming component for forming a glass. However, when the content of B₂O₃ exceeds 60 %, the refractive index of the glass decreases, which can no longer cope with the object of obtaining a high-refractivity glass. When the content thereof is 40 % or less, no sufficient stability against devitrification can be obtained, or the meltability of the glass decreases. The content of B₂O₃ is therefore limited to 40 to 60 % exclusive of 40 %. For improving the above effect produced by the incorporation of B₂O₃, the content thereof is preferably 41 to 60 %, more preferably more than 45 % but not more than 60 %. When the content of B₂O₃ is expressed by weight %, the content of B₂O₃ is preferably over 15 % by weight but not more than 40 % by weight, more preferably 16 to 35 % by weight.

La₂O₃ is also an essential component, and it increases the refractive index of the glass and improves the glass in chemical durability, without decreasing the stability of the glass against devitrification or increasing the dispersion. However, when the content thereof is less than 5 %, the above effects are not fully produced. When it exceeds 25 %, the glass is greatly degraded in stability against devitrification. The content of La₂O₃ is therefore limited to 5 to 25 %. For further improving the above effects, the content of La₂O₃ is more preferably 5 to 23 %, still more preferably 7 to 20 %. When the content of La₂O₃ is expressed by weight %, the content thereof is preferably 10 to 45 % by weight, more preferably 12 to 44 % by weight.

Like La₂O₃, Gd₂O₃ is also an essential component for improving the glass in refractivity and chemical durability without degrading the stability of the glass against devitrification and the low-dispersion property. When the content of Gd₂O₃ exceeds 22 %, the glass is liable to be poor in stability against devitrification and the glass is liable to be poor in precision press-moldability due to an increase in glass transition temperature. When it is less than 2 %, it is difficult to improve the glass in chemical durability while retaining a high refractive index. The content of Gd₂O₃ is therefore limited to 2 to 22 %. The content of Gd₂O₃ is more preferably in the range of 2 to 20 %, still more preferably 2 to 15 %, yet more preferably 2 to 10 %. When the content of Gd₂O₃ is expressed by weight %, the content of Gd₂O₃ is preferably over 9 % by weight but not more than 45 % by weight, more preferably 9.5 to 40 % by weight.

For achieving a refractive index (nd) of over 1.80 but not more than 2.00 and an Abbe's number (vd) of 40 to 45 exclusive of 40, the total content of La₂O₃ and Gd₂O₃ is preferably adjusted to 12 % or more, more preferably to 12 to 32 %, still more preferably to 14 to 27 %.

ZnO is also an essential component, and it decreases the melting temperature, liquidus temperature and glass transition temperature of the glass and is indispensable for adjusting the refractive index of the glass. When the content of ZnO is less than 5 %, the above effects expected cannot be produced. When it exceeds 45 %, the dispersion of the glass is increased, and the glass is poor in stability against devitrification and is poor in chemical durability. The content of ZnO is therefore limited to the range of 5 to 45 %. The content of ZnO is preferably in the range of 10 to 32 %. When the content of ZnO is expressed by weight %, it is preferably 3 to 15 %, more preferably 4 to 14 %.

Nb₂O₅ is an optional component that can be incorporated for improving the glass in stability and refractivity. Nb₂O₅ is incorporated such that the ratio of the content of Gd₂O₃ to the total content of Gd₂O₃ and Nb₂O₅ as an optional component (Gd₂O₃/(Gd₂O₃+Nb₂O₅)) is over 0.91 and up to 1.00. The above ratio is more preferably 0.92 - 1.00. Further, the ratio of the content of Nb₂O₅ to the total content of Gd₂O₃ and Nb₂O₅ (Nb₂O₅/(Gd₂O₃+Nb₂O₅)) is preferably not less than 0 but less than 0.09, more preferably 0 to 0.08. Further, the weight ratio of the content of Nb₂O₅ and the content of Gd₂O₃ (Nb₂O₅ content/Gd₂O₃ content) is preferably 0.1 or less. When the content of Nb₂O₅ alone is determined, the content of Nb₂O₅ by mol% is preferably 0 to 2 %, and more preferably, the content of Nb₂O₅ by weight % is 0 to 1 % by weight exclusive of 1 % by weight.

SiO₂ is an optional component, and with regard to a glass containing a large amount of La₂O₃ and Gd₂O₃, SiO₂ decreases the liquidus temperature of the glass, improves the glass in viscosity at a high temperature and greatly improves the glass in stability. When SiO₂ is incorporated to excess, the refractive index of the glass decreases, and further, the glass transition temperature increases, so that the precision press-molding of the glass is difficult. The content of SiO₂ is therefore in the range of 0 to 10 % exclusive of 10 %, and in this range, it is determined such that the ratio of the content of B₂O₃ to the total content of B₂O₃ and SiO₂ (B₂O₃/(B₂O₃+SiO₂)) is over 0.84 and up to 1.00. The ratio of (B₂O₃/(B₂O₃+SiO₂)) is preferably 0.85 - 1.00. More preferably, the content of SiO₂ is 0 to 9 %, and the ratio of (B₂O₃/(B₂O₃+SiO₂)) is 0.85 - 1.00. Still more preferably, the content of SiO₂ is 0 to 6 %, and the ratio of (B₂O₃/(B₂O₃+SiO₂)) is 0.85 - 1.00. Particularly preferably, the content of SiO₂ is 0 to 6 %, and the ratio of (B₂O₃/(B₂O₃+SiO₂)) is 0.88 - 1.00.

From the above viewpoint, the ratio of the content of SiO₂ to the total content of B₂O₃ and SiO₂ (SiO₂/(B₂O₃+SiO₂)) is preferably 0 or more but less than 0.16, more preferably 0 to 0.15.

When the above content of SiO₂ is expressed by weight %, the content of SiO₂ is preferably 0 to 6 % by weight exclusive of 6 % by weight, more preferably 0 to 5 % by weight exclusive of 5 % by weight, still more preferably 0 to 4.5 % by weight.

Li₂O is an optional component. As compared with other alkali metal oxides, Li₂O is a component that decreases the glass transition temperature to a great extent without causing the glass to decrease greatly in refractivity and chemical durability. When Li₂O is incorporated in a small amount, the degree of the above effect is particularly large, and it is a component effective for adjusting thermal properties of the glass. However, when the content thereof exceeds 15 %, the stability of the glass against devitrification sharply decreases, and the liquidus temperature of the glass increases. The content of Li₂O is therefore preferably in the range of 0.5 to 15 %, more preferably 0.5 to 10 %. When the content thereof is expressed by weight%, it is preferably 0 to 12 % by weight.

Both Li₂O and ZnO are components that decrease the glass transition temperature, so that the total content of Li₂O and ZnO is preferably 10 % or more, more preferably 15 % or more, still more preferably 15 to 35 %.

ZrO₂ is an optional component that is used as a component for attaining high-refractivity low-dispersion properties. When ZrO₂ is incorporated, ZrO₂ has the effect of improving the glass in viscosity at a high temperature and stability against devitrification without decreasing the refractive index of the glass, so that it is desirable to incorporate ZrO₂. For enhancing the above effect of ZrO₂, it is preferred to incorporate at least 0.5 % of ZrO₂. When the content of ZrO₂ exceeds 10 %, the liquidus temperature sharply increases, and the glass is degraded in stability against devitrification, so that the content of ZrO₂ is preferably in the range of 0.5 to 10 %, more preferably 1 to 10 %. When the content of ZrO₂ is expressed by weight%, it is preferably 0 to 9 % by weight.

Ta₂O₅ is an optional component that is used as a component for attaining (imparting the glass with) high-refractivity low-dispersion properties. When a small amount of Ta₂O₅ is incorporated, Ta₂O₅ has the effect of improving the glass in viscosity at a high temperature and stability against devitrification without decreasing the refractive index of the glass, so that it is desirable to incorporate Ta₂O₅. For enhancing the above effect, it is preferred to incorporate at least 0.2 % of Ta₂O₅. For avoiding a sharp increase in liquidus temperature and an increase in dispersion, it is preferred to limit the content thereof to 10 % or less. The content of Ta₂O₅ is therefore preferably 0.2 to 10 %, more preferably 1 to 8 %. When the content of Ta₂O₅ is expressed by weight%, it is preferably 0 to 25 % by weight.

WO₃ is a component that is incorporated as required for improving the glass in stability and meltability and improving the refractive index of the glass. When the content thereof exceeds 10 %, the dispersion of the glass is intensified, so that the required low-dispersion property cannot be obtained any longer. The content of WO₃ is therefore preferably 0 to 10 %, more preferably 0 to 7 %, still more preferably 0.5 to 7 %. When the content of WO₃ is expressed by weight%, it is preferably 0 to 15 % by weight.

Y₂O₃ and Yb₂O₃ are optional components that are used for imparting the glass with high-refractivity low-dispersion properties. When they are incorporated in a small amount each, they improve the glass in stability and chemical durability. When they are incorporated to excess, they impair the stability of the glass against devitrification and increase the glass transition temperature and the sag temperature of the glass. Therefore, the content of Y₂O₃ is preferably 0 to 4 %, more preferably 0 to 3 %. When the content of Y₂O₃ is expressed by weight%, it is desirably 0 to 6 % by weight exclusive of 6 % by weight, more desirably, 0 to 5 % by weight. The content of Yb₂O₃ is preferably 0 to 0.5 %. When the content of Yb₂O₃ is expressed by weight%, it is desirably 0 to 1 % by weight exclusive of 1 % by weight, more desirably 0 to 0.9 % by weight.

Preferably, the total content of La₂O₃, Gd₂O₃, Y₂O₃ and Yb₂O₃ is adjusted to 12 to 32 %. Further, the above total content by weight% is desirably adjusted to less than 50 % by weight, more preferably to 49 % by weight or less.

TiO₂ is an optional component that can be incorporated for adjusting the optical constants of the glass. When it is incorporated to excess, the dispersion is intensified, and the intended optical constants cannot be obtained any longer. Therefore, the content of TiO₂ is preferably 0 to 3 %, and more preferably, TiO₂ is not incorporated. When the content of TiO₂ is expressed by weight %, it is preferably in the range of 0 to 2 % by weight exclusive of 2 % by weight, more preferably in the range of 0 to 1.5 % by weight.

CaO is an optional component that can be incorporated for adjusting physical properties of the glass. When it is incorporated to excess, the optical constants decrease, and the desired refractive index cannot be obtained. The content of CaO is therefore preferably limited to 0 to 5 %, and more preferably, no CaO is incorporated. When the content of CaO is expressed by weight%, it is preferably in the range of 0 to 3 % by weight exclusive of 3 % by weight, more preferably in the range of 0 to 2.5 % by weight.

BaO is used as a component that imparts the glass with high-refractivity low-dispersion properties. When it is incorporated in a small amount, it improves the glass in stability and chemical durability. When the content of BaO exceeds 8 %, it greatly impairs the glass in stability against devitrification and increases the glass transition temperature and sag temperature of the glass. The content of BaO is therefore preferably limited to 0 to 8 %, more preferably to 0 to 1 %. When the content of BaO is expressed by weight%, it is preferably in the range of 0 to 10 % by weight.

Sb₂O₃ is used as a defoaming agent. When the amount of Sb₂O₃ based on the total amount of the glass components (a glass composition excluding Sb₂O₃) exceeds 1 % by weight, the molding surface of a press mold may be damaged during precision press-molding, so that the amount of Sb₂O₃ based on the total amount of the glass components is preferably 0 to 1 % by weight.

Meanwhile, PbO is a component that the optical glass constituting the glass preform of the present invention does not contain. PbO is harmful, and PbO also involves a problem that when a preform formed of a glass containing PbO is precision press-molded in a non-oxidizing atmosphere, lead is precipitated on the surface of a molded article to impair the transparency of an optical element or the precipitated lead adheres to a press mold.

Further, since GeO₂ is exceedingly expensive as compared with any other component, so that it is desirable to incorporate no GeO₂. However, if a high price should be accepted, GeO₂ may be incorporated up to less than 2 %.

Generally, Lu₂O₃ is not so frequently used as any other optical glass component, and it has a high scarcity value and is expensive as a material for an optical glass, so that it is preferred to incorporate no Lu₂O₃. The optical glass having the above composition can give a preform suitable for precision press-molding even if Lu₂O₃ is not incorporated.

It is desirable to incorporate none of elements that will cause environmental problems such as cadmium, tellurium, etc., radioactive elements such as thorium, etc., and toxic elements such as arsenic, etc. Further, desirably, the glass contains no fluorine in view of a vaporization problem, etc., during the melting of the glass.

The optical glass for forming the preform of the present invention can attain further improvements in the above effects when preferred contents, or more preferred contents of the components therefor are combined as required. Above all, the following glass compositions 1 to 6 are preferred.

### (Composition 1)

Optical glass containing the following components having the following contents,
B₂O₃ 40 - 60 % exclusive of 40 %,
La₂O₃ 5 - 25 %,
Gd₂O₃ 2 - 22 %,
ZnO 5 - 45 %,
Nb₂O₅ a content that satisfies a condition that Gd₂O₃/(Gd₂O₃+Nb₂O₅) is over 0.91 and up to 1.00,
SiO₂ 0 - 10 % exclusive of 10 %,
B₂O₃/ (B₂O₃+SiO₂) being over 0.84 and up to 1.00,
the total content of La₂O₃ and Gd₂O₃ being 12 % or more,
Li₂O 0.5 - 15 %,
the total content of ZnO and Li₂O being 10 % or more,
ZrO₂ 0.5 - 10 %,
Ta₂O₅ 0.2 - 10 %,
WO₃ 0 - 10 %,
Y₂O₃ 0 - 4 %,
Yb₂O₃ 0 - 0.5 %,
TiO₂ 0 - 3 %,
CaO 0 - 5 %, and
BaO 0 - 8 %,
and containing 0 to 1 % by weight, based on the total amount of the above glass components, of Sb₂O₃.

### (Composition 2)

Optical glass containing the following components having the following contents,
B₂O₃ 41 - 60 %,
La₂O₃ 5 - 25 %,
Gd₂O₃ 2 - 20 %,
ZnO 5 - 45 %,
Nb₂O₅ a content that satisfies a condition that Gd₂O₃/(Gd₂O₃+Nb₂O₅) is over 0. 92 - 1,
SiO₂ 0 - 9 %,
B₂O₃/ (B₂O₃+SiO₂) being over 0.85 - 1.00,
the total content of La₂O₃ and Gd₂O₃ being 12 % or more,
Li₂O 0.5 - 15 %,
the total content of ZnO and Li₂O being 10 % or more,
ZrO₂ 0.5 - 10 %,
Ta₂O₅ 0.2 - 10 %,
WO₃ 0 - 10 %,
Y₂O₃ 0 - 3 %,
Yb₂O₃ 0 - 0.5 %,
TiO₂ 0 - 3 %,
CaO 0 - 5 %, and
BaO 0 - 8 %,
and containing 0 to 1 % by weight, based on the total amount of the above glass components, of Sb₂O₃.

### (Composition 3)

Optical glass containing the following components having the following contents,
B₂O₃ 41 - 60 %,
La₂O₃ 5 - 23 %,
Gd₂O₃ 2 - 15 %,
ZnO 5 - 45 %,
Nb₂O₅ a content that satisfies a condition that Gd₂O₃/(Gd₂O₃+Nb₂O₅) is 0. 92 - 1.00,
SiO₂ 0 - 9 %,
B₂O₃/(B₂O₃+SiO₂) being 0.85 - 1.00,
the total content of La₂O₃ and Gd₂O₃ being 12 - 32%
Li₂O 0.5 - 15 %,
the total content of ZnO and Li₂O being 15 % or more,
ZrO₂ 0.5 - 10 %,
Ta₂O₅ 0.2 - 10 %,
WO₃ 0 - 7 %,
Y₂O₃ 0 - 3 %,
Yb₂O₃ 0 - 0.5 %,
TiO₂ 0 - 3 %,
CaO 0 - 5 %, and
BaO 0 - 1 %,
and containing 0 to 1 % by weight, based on the total amount of the above glass components, of Sb₂O₃.

### (Composition 4)

Optical glass containing the following components having the following contents,
B₂O₃ over 45 % but not more than 60 %, La₂O₃ 5 - 23 %, Gd₂O₃ 2 - 22 %, ZnO 10 - 32 %, Nb₂O₅ 0 - 2 % Gd₂O₃/(Gd₂O₃+Nb₂O₅) being over 0.91 but 1.00 or less, SiO₂ 0 - 6 %, B₂O₃/ (B₂O₃+SiO₂) being 0.85 - 1.00,
the total content of La₂O₃ and Gd₂O₃ being 12 - 32%
Li₂O 0.5 - 10 %,
the total content of ZnO and Li₂O being 15 % or more,
ZrO₂ 0.5 - 10 %,
Ta₂O₅ 0.2 - 10 %,
WO₃ 0 - 7 %,
Y₂O₃ 0 - 3 %,
Yb₂O₃ 0 - 0.5 %,
TiO₂ 0 - 3 %,
gCaO 0 - 5 %, and
BaO 0 - 1 %,
and containing 0 to 1 % by weight, based on the total amount of the above glass components, of Sb₂O₃.

### (Composition 5)

Optical glass containing the following components having the following contents,
B₂O₃ over 45 % but not more than 60 %,
La₂O₃ 7 - 20 %,
Gd₂O₃ 2 - 22 %,
ZnO 10 - 32 %,
Nb₂O₅ 0 - 2 %
Gd₂O₃/ (Gd₂O₃+Nb₂O₅) being over 0.91 but 1.00 or less,
SiO₂ 0 - 6 %,
B₂O₃/ (B₂O₃+SiO₂) being 0.85 - 1.00,
the total content of La₂O₃ and Gd₂O₃ being 14 - 27%
Li₂O 0.5 - 10 %,
the total content of ZnO and Li₂O being 15 - 35 %,
ZrO₂ 1 - 10 %,
Ta₂O₅ 1 - 8 %,
WO₃ 0 - 7 %,
Y₂O₃ 0 - 3 %,
Yb₂O₃ 0 - 0.5 %,
TiO₂ 0 - 3 %,
CaO 0 - 5 %, and
BaO 0 - 1 %,
and containing 0 to 1 % by weight, based on the total amount of the above glass components, of Sb₂O₃.

### (Composition 6)

Optical glass containing the following components having the following contents,
B₂O₃ over 45 % but not more than 60 %,
La₂O₃ 7 - 20 %,
Gd₂O₃ 2 - 10 %,
ZnO 10 - 32 %,
Nb₂O₅ a content that satisfies a condition that Gd₂O₃/(Gd₂O₃+Nb₂O₅) is 0. 92 - 1.00,
SiO₂ 0 - 6 %,
B₂O₃/(B₂O₃+SiO₂) being 0.85 - 1.00,
the total content of La₂O₃ and Gd₂O₃ being 14 - 27%
Li₂O 0.5 - 10 %,
the total content of ZnO and Li₂O being 15 - 35 %,
ZrO₂ 1 - 10 %,
Ta₂O₅ 1 - 8 %,
WO₃ 0.5 - 7 %,
Y₂O₃ 0 - 3 %,
Yb₂O₃ 0 - 0.5 %,
TiO₂ 0 - 3 %,
CaO 0 - 5 %, and
BaO 0 - 1 %,
and containing 0 to 1 % by weight, based on the total amount of the above glass components, of Sb₂O₃.

In the optical glass for constituting the preform of the present invention, the total content of B₂O₃, La₂O₃, ZnO, Gd₂O₃, Li₂O, ZrO₂, Ta₂O₅, WO₃ and SiO₂ preferably exceeds 95 %, more preferably exceeds 98 %, and still more preferably exceeds 99 %.

Particularly, the total content of B₂O₃, La₂O₃, ZnO, Gd₂O₃, Li₂O, ZrO₂, Ta₂O₅, WO₃ and SiO₂ preferably exceeds 95 % and 95 % by weight, more preferably exceeds 98 % and 98 % by weight, and is still more preferably 100 %.

In the above compositions 4, 5 and 6, further, B₂O₃/(B₂O₃+SiO₂) is more preferably 0.88 - 1.00.

The optical glass for constituting the glass preform of the present invention has a refractive index (nd) of over 1.80 but not more than 2.00, preferably 1.80 to 1.90. Further, the above optical glass has an Abbe's number (vd) of 40 to 45 exclusive of 45, preferably 40 to 44.5.

The optical glass for constituting the glass preform of the present invention can be obtained, for example, by shaping a molten glass obtained by preparation, melting, clarification, stirring and homogenization of raw material compounds according to a conventional method, and cooling a shaped glass.

For highly productively producing optical elements satisfying requirements of high surface accuracy and a high internal quality by precision press-molding of the glass preform of the present invention, preferably, the optical glass for constituting the glass preform is caused to come into a plastic-deformable state at a relatively low temperature. When the glass transition temperature is high, the molding surface of a press mold is naturally exposed to a high temperature during the precision press-molding, so that the above molding surface is intensely worn or comes to be damaged. In the precision press-molding, even a very small defect caused on the molding surface of a press mold is transferred to an optical-function surface of an optical element as an end product, and, as a result, the performance of the optical element is impaired. When the precision press-moldability is taken into account, the optical glass constituting the glass preform of the present invention preferably has a glass transition temperature (Tg) of 650°C or lower, more preferably 630°C or lower. Further, the above optical glass preferably has a sag temperature (Ts) of 670°C or lower, more preferably 650°C or lower. For enabling the stable flowing and shaping of a molten glass when the glass preform of the present invention is produced from the molten glass, preferably, the optical glass exhibits a viscosity of 4 to 40 dPa·s, more preferably a viscosity of 5 to 30 dPa·s, at its liquidus temperature.

In the glass preform of the present invention, preferably, all surfaces are formed by solidification of the glass in a molten state, and more preferably, all surfaces are formed by solidification of the glass in a molten state and not machined. When the glass preform has all surfaces formed by solidification of the glass in a molten state, the glass preform can have smooth surfaces (free of any cutting mark or any polishing mark).

Desirably, all surfaces of the glass preform of the present invention are formed of free surfaces. A free surface refers to a surface that is formed without being brought into contact with any solid and hence without having a surface of the solid transferred to a surface of a glass in the process of cooling the glass in a molten state or softened state. Specifically, a glass in a molten state or softened state is cooled while it is caused to float by application of a gas pressure to the glass, whereby there can be produced a glass preform of which all the surfaces are formed by solidification of the glass in a molten state or of which all the surfaces are formed of free surfaces. When all of the surfaces of a glass preform are formed of free surfaces, there is not required any polishing step, so that the production cost is decreased. Further, there can be avoided a case where a polishing mark remains after precision press-molding to degrade the surface quality of an optical element.

The surface of the glass preform of the present invention may be provided with a film as required for preventing adhesion of the glass to a press mold, and making the glass easily extendable in the mold, during the precision press-molding thereof. Examples of the film include a carbon-containing film and a self-assembled monolayer film. The carbon-containing film desirably includes a halogenated carbon film and a carbon film.

In the present invention, the glass preform means an intermediate made of a glass, which is to be precision press-molded by heating it. The form of the glass preform is determined depending upon a precision press-molded product (optical element). The precision press-molded products (optical element) produced from the glass preform of the present invention includes many products having an axis of rotational symmetry such as lenses, so that the glass preform desirably has a form having an axis of rotational symmetry. Specifically, the form of the glass preform includes a sphere or a form having one axis of rotational symmetry. The form having one axis of rotational symmetry includes a form in which a cross section including the above axis of rotational symmetry has a smooth edge line without any corner or any dent, such as a form having the above cross section whose edge line forms an ellipse having a minor axis in agreement with the axis of rotational symmetry, and it also includes a form obtained by flattening a sphere to some extent (a form obtained by decreasing dimensions of a sphere along one axis passing the center of the sphere).

In view of the characteristics of the precision press-molding, not only the inside of the glass preform but also the surface thereof is required to be free of defects such as striae, cracking, breaking, fogging, devitrification, and the like. Further, since the surface of the glass preform remains as a surface of a precision press-molded product (optical element) as an end product, the surface of the glass preform is desirably smooth.

The process for producing a glass preform, provided by the present invention, will be explained below. The process comprises separating a molten glass gob having a predetermined weight from a molten glass and cooling the glass gob to obtain a precision press-molding glass preform, the glass preform having a weight equivalent to the weight of the molten glass gob.

More specifically, there is provided a fully melted, clarified and homogenized molten glass having a temperature of approximately 1,000 to 1,400°C and a viscosity of approximately 0.1 to 5 dPa·s, and a glass is discharged from a flow-out nozzle or a flow-out pipe while the glass is temperature-adjusted so as to have a viscosity of approximately 3 to 60 dPa·s, whereby the glass preform is produced.

The method of the temperature-adjustment includes a method in which the temperature of the flow-out nozzle or the flow-out pipe is controlled. Desirably, the flow-out nozzle or the flow-out pipe is made of platinum or a platinum alloy. Specific examples of the production process include (a) a process of dropping a molten glass from a flow-out nozzle in the form of a molten glass drop having a predetermined weight and receiving the molten glass drop with a receiving member to produce a glass preform, (b) a process of similarly dropping a molten glass drop having a predetermined weight from the above flow-out nozzle into liquid nitrogen or the like to produce a glass preform, and (c) a process of causing a molten glass flow to flow downward from a flow-out pipe made of platinum or a platinum alloy, receiving the forward end portion of the molten glass flow with a receiving member to form a narrow-diameter portion between nozzle and receiving member sides of the molten glass flow, then separating a molten glass flow from the narrow-diameter portion and receiving a molten glass gob having a predetermined weight with the receiving member to form it into a glass preform. When a molten glass is dropped, the viscosity of the glass is preferably 3 to 30 dPa·s. When a molten glass is caused to flow downward in the form of a molten glass flow, the viscosity of the glass is preferably 2 to 60 dPa·s.

For producing a glass preform having a smooth surface free of scratches, soiling, a surface alteration, etc., such as a free surface, there is employed a method in which a molten glass gob is shaped into a glass preform while it is caused to float by applying a gas pressure thereto above a shaping mold, or a method in which a molten glass drop is introduced into a medium prepared by converting a substance which is a gas at room temperature under atmospheric pressure, to a liquid by cooling, such as liquid nitrogen, and the molten glass drop is shaped into a glass preform.

When a molten glass gob is shaped into a glass preform while it is caused to float, a gas (floating gas) is blown to the molten glass gob to apply a gas pressure upwardly. In this case, if the viscosity of the molten glass gob is too low, the floating gas is taken into the glass and remains in a glass preform in the form of bubbles. When the molten glass gob has a viscosity in the above range, the glass gob can be caused to float without taking the floating gas into the glass.

The gas to be used for applying the floating gas to a glass preform (glass gob) includes air, N₂ gas, O₂ gas, Ar gas, He gas, water vapor, and the like. The gas pressure is not specially limited so long as the glass preform can be caused to float without coming in contact with a solid such as the surface of a shaping mold.

In the process for producing a glass preform, provided by the present invention, the weight of the glass preform is determined so as to be precisely equivalent to the weight of a molten glass gob. According to the precision press-molding of the glass preform of the present invention, there can be produced precision press-molded products. When the weight of a glass preform is smaller than the weight of a precision press-molded product as an end product, the glass is not filled up to the entire molding surface of press mold, and there are therefore caused a problem that no intended surface accuracy can be obtained or that the thickness of a precision press-molded product is smaller than a predetermined thickness. When the weight of the glass preform is too large, there is caused a problem that an extra glass enters a gap of press mold members to form burrs or that the thickness of a molded product is larger than a predetermined thickness. It is therefore required to control the weight of the glass preform more accurately than any glass preform for general press molding. For this reason, the weight of the glass preform and the weight of a molten glass gob are determined to be accurately equivalent to each other as well.

The optical element of the present invention will be explained below. The optical element of the present invention is characteristically a product produced by heating the above glass preform of the present invention and precision press-molding it.

The surface of the optical element of the present invention may be provided with an antireflection film, a reflection film, a partial reflection film for reflecting light in a certain wavelength region, a film for absorbing light in a certain wavelength region, or the like.

The optical element of the present invention is obtained by precision press-molding the glass preform of the present invention having the above properties, so that the optical-function surface thereof is free of very small damage caused by cutting or polishing. Further, it is formed of the optical glass that contains no PbO and that preferably contains none of GeO₂ and Lu₂O₃, so that it is remarkably excellent in view of environments and a cost.

Examples of the optical element of the present invention include various lenses such as a spherical lens, an aspherical lens, a microlens, a lens array and a lens with a diffraction grating, a diffraction grating, a prism, a prism with a lens, a polygon mirror, and the like.

The process for producing an optical element, provided by the present invention, will be explained below. The process for producing an optical element, provided by the present invention, comprises heating the glass preform of the present invention and precision press-molding it.

The precision press-molding uses a press mold having a molding surface that is highly precisely processed (machined) in the form of a predetermined form, and the molding surface may be provided with a mold release film for preventing adhesion of a glass during the pressing. The mold release film includes a carbon-containing film, a nitride and a noble metal. The carbon-containing film is preferably selected from a hydrogenated carbon film or a carbon film.

The process for producing an optical element, provided by the present invention, includes a process which comprises introducing a precision press-molding glass preform into a press mold, heating the precision press-molding glass preform and the press mold together and precision press-molding the glass preform to produce an optical element and a process which comprises introducing a precision press-molding glass preform preheated to have a higher temperature than a press mold into the press mold and then precision press-molding the glass preform.

More specifically, a glass preform is introduced into between a pair of facing upper and lower mold members having precisely worked molding surface(s), both a press mold and the glass preform are temperature-increased under heat up to a temperature corresponding to a viscosity of 10⁵ to 10⁹ dPa·s of an optical glass to soften the glass preform, and the glass preform is press-molded, whereby the molding surface of the press mold can be transferred to the glass preform.

Alternatively, a glass preform that is temperature-increased beforehand to a temperature corresponding to a viscosity of 10⁴ to 10⁸ dPa·s as a glass viscosity is introduced into between a pair of facing upper and lower mold members having precisely worked molding surface(s), and the glass preform is press-molded, whereby the molding surface of a press mold can be transferred to the glass preform.

The atmosphere in the press molding is preferably non-oxidizing for protecting the surface of the press mold and the mold release film provided to the surface of the glass preform. The non-oxidizing atmosphere can be selected from an inert gas such as argon or nitrogen, a reducing gas such as hydrogen or a mixture of these. Preferably, a nitrogen gas or a nitrogen gas containing a small amount of hydrogen gas can be used. The pressure and time period for the press-molding can be determined as required by taking account of the viscosity of an optical glass, and the like, and the press-molding can be carried out, for example, under a pressure of approximately 5 to 15 MPa for a pressing time period of 10 to 300 seconds. The press-molding conditions such as a pressing time period, a pressure, and the like can be determined as required within well-known ranges depending upon the form and dimensions of a press-molded product.

Then, the press mold and the glass molded product are cooled, and preferably, when the glass molded product comes to have a temperature of a strain point or lower, the mold members are separated to take out the glass molded product. For bringing optical properties precisely into agreement with desired values, the conditions for annealing the glass molded product during the cooling thereof, such as an annealing rate, may be adjusted as required.

### Examples

The present invention will be explained further in detail with reference to Examples hereinafter, while the present invention shall not be limited by these Examples.

Optical glasses were measured for various properties by the following methods.

### (1) Refractive index (nd) and Abbe's number (vd)

An optical glass maintained at a temperature between the glass transition temperature (Tg) and the sag temperature (Ts) was temperature-decreased at a rate of -30°C/hour and measured for a refractive index (nd) and an Abbe's number (vd) (with GMR-1 supplied by Kalnew Optical Industrial Co., Ltd.) by a refractive index measurement method according to Japan Optical Glass Society Standard.

### (2) Glass transition temperature (Tg) and sag temperature (Ts)

An optical glass was measured for a glass transition temperature and a sag temperature with a thermo-mechanical analyzer TMA8510 supplied by Rigaku Corporation at a temperature-elevation rate of 4°C/minute under a load of 98 mN.

### (3) Liquidus temperature (LT) and glass viscosity at liquidus temperature

The liquidus temperature was determined as a lowest temperature at which no crystal precipitated when a molten glass was cooled to a predetermined temperature and maintained for 2 hours. With regard to the viscosity of a glass, an optical glass was measured for a viscosity at its liquidus temperature with a coaxial double-cylindrical rotation viscometer (by means of a high-temperature viscosity measurement apparatus "RHEOTRONIC" supplied by Tokyo Kogyo K.K.) by a measurement method according to JIS Z 8803.

### (4) Specific gravity

Measured (with electronic specific gravity meter MD-200S supplied by Alfa Mirage Co., Ltd.) by an Archimedean method.

### Examples 1 - 39

Oxides, carbonates, sulfates, nitrates, hydroxides, etc., such as SiO₂, H₃BO₃, La₂O₃, ZnO, ZnCO₃, ZrO₂, Li₂CO₃, etc., as raw materials were weighed so as to obtain 250 to 300 g of glass compositions shown in Tables 1-1 to 1-4. The weighed raw materials in each Example were fully mixed to obtain a formulated batch, the formulated batch was placed in a platinum crucible, the crucible was placed in an electric furnace maintained at 1,200 to 1,450°C, and the formulated batch was melted with stirring in air for 2 to 4 hours. After melted, the molten glass was cast into a 40 x 70 x 15 mm mold made of carbon, and immediately after the molten glass was gradually cooled to a glass transition temperature, the glass in the mold was placed in an annealing furnace. The glass was annealed in a glass transition temperature range for approximately 1 hour and allowed to cool in the furnace, to obtain an optical glass. In the thus-obtained optical glasses, there were precipitated no crystals that were observable through a microscope. Tables 1-1 to 1-4 show the compositions of the optical glasses when they were expressed by mol%, and Table 1-5 shows the compositions of the optical glasses when they were expressed by weight%.

**Table 1-1**

| Example | Composition (mol%) | | | | | |
|---|---|---|---|---|---|---|
| | B₂O₃ | La₂O₃ | Gd₂O₃ | La₂O₃-Gd₂O₃ | ZnO | Li₂O |
| 1 | 45.69 | 13.36 | 6.47 | 19.83 | 15.52 | 3.45 |
| 2 | 46.09 | 13.48 | 6.52 | 20.00 | 13.91 | 4.35 |
| 3 | 46.55 | 12.93 | 6.03 | 18.97 | 17.24 | 3.45 |
| 4 | 44.92 | 12.71 | 5.93 | 18.64 | 20.34 | 2.54 |
| 5 | 43.33 | 12.50 | 5.83 | 18.33 | 23.33 | 1.67 |
| 6 | 41.80 | 12.30 | 5.74 | 18.03 | 26.23 | 0.82 |
| 7 | 46.15 | 12.82 | 5.98 | 18.80 | 18.80 | 2.56 |
| 8 | 46.32 | 12.99 | 6.06 | 19.05 | 17.32 | 3.46 |
| 9 | 46.09 | 13.04 | 6.09 | 19.13 | 17.39 | 3.48 |
| 10 | 45.85 | 13.10 | 6.11 | 19.21 | 17.47 | 3.49 |
| 11 | 46.96 | 13.48 | 6.52 | 20.00 | 15.65 | 3.48 |
| 12 | 46.75 | 13.42 | 6.49 | 19.91 | 16.45 | 3.03 |
| 13 | 46.55 | 13.36 | 6.47 | 19.83 | 17.24 | 2.59 |
| 14 | 47.83 | 13.48 | 6.52 | 20.00 | 17.39 | 2.61 |
| 15 | 48.26 | 13.04 | 6.52 | 19.57 | 17.39 | 2.61 |
| 16 | 48.47 | 13.54 | 6.55 | 20.09 | 17.47 | 2.62 |
| 17 | 47.88 | 13.01 | 6.50 | 19.51 | 17.35 | 2.60 |
| 18 | 47.49 | 12.98 | 6.49 | 19.46 | 17.30 | 2.60 |
| 19 | 47.11 | 12.94 | 6.47 | 19.41 | 17.26 | 2.59 |
| 20 | 47.61 | 13.01 | 6.50 | 19.51 | 17.35 | 2.60 |
| 21 | 47.74 | 13.04 | 6.52 | 19.57 | 17.39 | 2.61 |
| 22 | 47.83 | 13.48 | 5.65 | 19.13 | 17.39 | 2.61 |
| 23 | 47.83 | 13.48 | 4.78 | 18.26 | 17.39 | 2.61 |
| 24 | 47.83 | 13.48 | 3.91 | 17.39 | 17.39 | 2.61 |
| 25 | 40.08 | 13.22 | 6.61 | 19.83 | 18.18 | 2.07 |
| 26 | 40.83 | 13.33 | 6.67 | 20 | 16.67 | 2.5 |
| 27 | 41.6 | 13.45 | 6.72 | 20.17 | 15.13 | 2.94 |
| 28 | 46.55 | 12.93 | 6.03 | 18.97 | 16.03 | 3.45 |
| 29 | 46.55 | 12.93 | 6.03 | 18.97 | 15.52 | 3.45 |
| 30 | 46.55 | 12.93 | 6.03 | 18.97 | 15 | 3.45 |
| 31 | 39.26 | 13.22 | 6.61 | 19.83 | 18.18 | 2.89 |
| 32 | 40 | 13.33 | 6.67 | 20 | 16.67 | 3.33 |
| 33 | 40.76 | 13.45 | 6.72 | 20.17 | 15.13 | 3.78 |
| 34 | 39.67 | 13.22 | 6.61 | 19.83 | 18.18 | 2.48 |
| 35 | 41.34 | 13.36 | 6.47 | 19.83 | 17.95 | 2.51 |
| 36 | 43.04 | 13.5 | 6.33 | 19.83 | 17.72 | 2.53 |
| 37 | 40.25 | 13.28 | 6.64 | 19.92 | 18.26 | 2.49 |
| 38 | 41.93 | 13.42 | 6.5 | 19.92 | 18.03 | 2.52 |
| 39 | 43.64 | 13.56 | 6.36 | 19.92 | 17.8 | 2.54 |

**Table 1-2**

| Example | Composition (mol%) | | | | |
|---|---|---|---|---|---|
| | ZnO+Li₂O | ZrO₂ | Ta₂O₅ | WO₃ | SiO₂ |
| 1 | 18.97 | 5.17 | 3.45 | 3.45 | 3.45 |
| 2 | 18.26 | 5.22 | 3.48 | 3.48 | 3.48 |
| 3 | 20.69 | 5.17 | 3.45 | 3.45 | 1.72 |
| 4 | 22.88 | 5.08 | 3.39 | 3.39 | 1.69 |
| 5 | 25.00 | 5.00 | 3.33 | 3.33 | 1.67 |
| 6 | 27.05 | 4.92 | 3.28 | 3.28 | 1.64 |
| 7 | 21.37 | 5.13 | 3.42 | 3.42 | 1.71 |
| 8 | 20.78 | 5.19 | 3.46 | 3.46 | 1.73 |
| 9 | 20.87 | 5.22 | 3.48 | 3.48 | 1.74 |
| 10 | 20.96 | 5.24 | 3.49 | 3.49 | 1.75 |
| 11 | 19.13 | 5.22 | 3.48 | 3.48 | 1.74 |
| 12 | 19.48 | 5.19 | 3.46 | 3.46 | 1.73 |
| 13 | 19.83 | 5.17 | 3.45 | 3.45 | 1.72 |
| 14 | 20.00 | 5.22 | 3.48 | 3.48 | 0.00 |
| 15 | 20.00 | 5.22 | 3.48 | 3.48 | 0.00 |
| 16 | 20.09 | 4.37 | 3.49 | 3.49 | 0.00 |
| 17 | 19.95 | 5.20 | 3.47 | 3.99 | 0.00 |
| 18 | 19.90 | 5.19 | 3.46 | 4.50 | 0.00 |
| 19 | 19.84 | 5.18 | 3.45 | 5.00 | 0.00 |
| 20 | 19.95 | 5.20 | 3.47 | 3.99 | 0.00 |
| 21 | 20.00 | 5.22 | 3.48 | 3.48 | 0.00 |
| 22 | 20.00 | 5.22 | 3.48 | 3.48 | 0.00 |
| 23 | 20.00 | 5.22 | 3.48 | 3.48 | 0.00 |
| 24 | 20.00 | 5.22 | 3.48 | 3.48 | 0.00 |
| 25 | 20.25 | 4.96 | 3.31 | 3.31 | 8.26 |
| 26 | 19.17 | 5 | 3.33 | 3.67 | 8 |
| 27 | 18.07 | 5.04 | 3.36 | 4.03 | 7.73 |
| 28 | 19.48 | 6.38 | 3.45 | 3.45 | 1.72 |
| 29 | 18.97 | 6.9 | 3.45 | 3.45 | 1.72 |
| 30 | 18.45 | 7.41 | 3.45 | 3.45 | 1.72 |
| 31 | 21.07 | 4.96 | 3.31 | 3.31 | 8.26 |
| 32 | 20.00 | 5 | 3.33 | 3.67 | 8 |
| 33 | 18.91 | 5.04 | 3.36 | 4.03 | 7.73 |
| 34 | 20.66 | 4.96 | 3.31 | 3.31 | 8.26 |
| 35 | 20.46 | 5.01 | 3.34 | 3.34 | 6.68 |
| 36 | 20.25 | 5.06 | 3.38 | 3.38 | 5.06 |
| 37 | 20.75 | 4.98 | 3.32 | 3.32 | 7.47 |
| 38 | 20.55 | 5.03 | 3.35 | 3.35 | 5.87 |
| 39 | 20.34 | 5.08 | 3.39 | 3.39 | 4.24 |

**Table 1-3**

| Example | Composition (mol%) | | |
|---|---|---|---|
| | B₂O₃/(B₂O₃+SiO₂) | SiO₂/(B₂O₃+SiO₂) | Nb₂O₅ |
| 1 | 0.93 | 0.07 | 0.00 |
| 2 | 0.93 | 0.07 | 0.00 |
| 3 | 0.96 | 0.04 | 0.00 |
| 4 | 0.96 | 0.04 | 0.00 |
| 5 | 0.96 | 0.04 | 0.00 |
| 6 | 0.96 | 0.04 | 0.00 |
| 7 | 0.96 | 0.04 | 0.00 |
| 8 | 0.96 | 0.04 | 0.00 |
| 9 | 0.96 | 0.04 | 0.00 |
| 10 | 0.96 | 0.04 | 0.00 |
| 11 | 0.96 | 0.04 | 0.00 |
| 12 | 0.96 | 0.04 | 0.00 |
| 13 | 0.96 | 0.04 | 0.00 |
| 14 | 1.00 | 0.00 | 0.00 |
| 15 | 1.00 | 0.00 | 0.00 |
| 16 | 1.00 | 0.00 | 0.00 |
| 17 | 1.00 | 0.00 | 0.00 |
| 18 | 1.00 | 0.00 | 0.00 |
| 19 | 1.00 | 0.00 | 0.00 |
| 20 | 1.00 | 0.00 | 0.26 |
| 21 | 1.00 | 0.00 | 0.52 |
| 22 | 1.00 | 0.00 | 0.00 |
| 23 | 1.00 | 0.00 | 0.00 |
| 24 | 1.00 | 0.00 | 0.00 |
| 25 | 0.83 | 0.17 | 0.00 |
| 26 | 0.84 | 0.16 | 0.00 |
| 27 | 0.84 | 0.16 | 0.00 |
| 28 | 0.96 | 0.04 | 0.00 |
| 29 | 0.96 | 0.04 | 0.00 |
| 30 | 0.96 | 0.04 | 0.00 |
| 31 | 0.83 | 0.17 | 0.00 |
| 32 | 0.83 | 0.17 | 0.00 |
| 33 | 0.84 | 0.16 | 0.00 |
| 34 | 0.83 | 0.17 | 0.00 |
| 35 | 0.86 | 0.14 | 0.00 |
| 36 | 0.89 | 0.11 | 0.00 |
| 37 | 0.84 | 0.16 | 0.00 |
| 38 | 0.88 | 0.12 | 0.00 |
| 39 | 0.91 | 0.09 | 0.00 |

**Table 1-4**

| Example | Composition (mol%) | | | |
|---|---|---|---|---|
| | Gd₂O₃/(Gd₂O₃+Nb₂O₅) | Nb₂O₅/(Gd₂O₃+Nb₂O₅) | Y₂O₃ | Total |
| 1 | 1.00 | 0.00 | 0.00 | 100.00 |
| 2 | 1.00 | 0.00 | 0.00 | 100.00 |
| 3 | 1.00 | 0.00 | 0.00 | 100.00 |
| 4 | 1.00 | 0.00 | 0.00 | 100.00 |
| 5 | 1.00 | 0.00 | 0.00 | 100.00 |
| 6 | 1.00 | 0.00 | 0.00 | 100.00 |
| 7 | 1.00 | 0.00 | 0.00 | 100.00 |
| 8 | 1.00 | 0.00 | 0.00 | 100.00 |
| 9 | 1.00 | 0.00 | 0.00 | 100.00 |
| 10 | 1.00 | 0.00 | 0.00 | 100.00 |
| 11 | 1.00 | 0.00 | 0.00 | 100.00 |
| 12 | 1.00 | 0.00 | 0.00 | 100.00 |
| 13 | 1.00 | 0.00 | 0.00 | 100.00 |
| 14 | 1.00 | 0.00 | 0.00 | 100.00 |
| 15 | 1.00 | 0.00 | 0.00 | 100.00 |
| 16 | 1.00 | 0.00 | 0.00 | 100.00 |
| 17 | 1.00 | 0.00 | 0.00 | 100.00 |
| 18 | 1.00 | 0.00 | 0.00 | 100.00 |
| 19 | 1.00 | 0.00 | 0.00 | 100.00 |
| 20 | 0.96 | 0.04 | 0.00 | 100.00 |
| 21 | 0.93 | 0.07 | 0.00 | 100.00 |
| 22 | 1.00 | 0.00 | 0.87 | 100.00 |
| 23 | 1.00 | 0.00 | 1.74 | 100.00 |
| 24 | 1.00 | 0.00 | 2.61 | 100.00 |
| 25 | 1.00 | 0.00 | 0.00 | 100.00 |
| 26 | 1.00 | 0.00 | 0.00 | 100.00 |
| 27 | 1.00 | 0.00 | 0.00 | 100.00 |
| 28 | 1.00 | 0.00 | 0.00 | 100.00 |
| 29 | 1.00 | 0.00 | 0.00 | 100.00 |
| 30 | 1.00 | 0.00 | 0.00 | 100.00 |
| 31 | 1.00 | 0.00 | 0.00 | 100.00 |
| 32 | 1.00 | 0.00 | 0.00 | 100.00 |
| 33 | 1.00 | 0.00 | 0.00 | 100.00 |
| 34 | 1.00 | 0.00 | 0.00 | 100.00 |
| 35 | 1.00 | 0.00 | 0.00 | 100.00 |
| 36 | 1.00 | 0.00 | 0.00 | 100.00 |
| 37 | 1.00 | 0.00 | 0.00 | 100.00 |
| 38 | 1.00 | 0.00 | 0.00 | 100.00 |
| 39 | 1.00 | 0.00 | 0.00 | 100.00 |

**Table 1-5**

| Ex. | Composition (wt%) | | | | | | | | | | | |
|---|---|---|---|---|---|---|---|---|---|---|---|---|
| | B₂O₃ | La₂O₃ | Gd₂O₃ | ZnO | Li₂O | ZrO₂ | Ta₂O₆ | WO₃ | SiO₂ | Nb₂O₅ | Y₂O₃ | Total |
| 1 | 22.1 | 30.2 | 16.3 | 8.8 | 0.7 | 4.4 | 10.6 | 5.6 | 1.4 | 0.0 | 0.0 | 100.0 |
| 2 | 22.2 | 30.5 | 16.4 | 7.9 | 0.9 | 4.5 | 10.7 | 5.6 | 1.5 | 0.0 | 0.0 | 100.0 |
| 3 | 22.8 | 29.7 | 15.4 | 9.9 | 0.7 | 4.5 | 10.7 | 5.6 | 0.7 | 0.0 | 0.0 | 100.0 |
| 4 | 22.1 | 29.3 | 15.2 | 11.7 | 0.5 | 4.4 | 10.6 | 5.6 | 0.7 | 0.0 | 0.0 | 100.0 |
| 5 | 21.4 | 28.9 | 15.0 | 13.5 | 0.4 | 4.4 | 10.4 | 5.5 | 0.7 | 0.0 | 0.0 | 100.0 |
| 6 | 20.7 | 28.5 | 14.8 | 15.2 | 0.2 | 4.3 | 10.3 | 5.4 | 0.7 | 0.0 | 0.0 | 100.0 |
| 7 | 22.6 | 29.4 | 15.2 | 10.8 | 0.5 | 4.5 | 10.6 | 5.6 | 0.7 | 0.0 | 0.0 | 100.0 |
| 8 | 22.6 | 29.7 | 15.4 | 9.9 | 0.7 | 4.5 | 10.7 | 5.6 | 0.7 | 0.0 | 0.0 | 100.0 |
| 9 | 22.5 | 29.8 | 15.4 | 9.9 | 0.7 | 4.5 | 10.8 | 5.7 | 0.7 | 0.0 | 0.0 | 100.0 |
| 10 | 22.3 | 29.9 | 15.5 | 9.9 | 0.7 | 4.5 | 10.8 | 5.7 | 0.7 | 0.0 | 0.0 | 100.0 |
| 11 | 22.6 | 30.3 | 16.3 | 8.8 | 0.7 | 4.4 | 10.6 | 5.6 | 0.7 | 0.0 | 0.0 | 100.0 |
| 12 | 22.5 | 30.2 | 16.2 | 9.2 | 0.6 | 4.4 | 10.6 | 5.5 | 0.7 | 0.0 | 0.0 | 100.0 |
| 13 | 22.4 | 30.1 | 16.2 | 9.7 | 0.5 | 4.4 | 10.5 | 5.5 | 0.7 | 0.0 | 0.0 | 100.0 |
| 14 | 22.9 | 30.2 | 16.2 | 9.7 | 0.5 | 4.4 | 10.6 | 5.5 | 0.0 | 0.0 | 0.0 | 100.0 |
| 15 | 23.2 | 29.4 | 16.3 | 9.8 | 0.5 | 4.4 | 10.6 | 5.6 | 0.0 | 0.0 | 0.0 | 100.0 |
| 16 | 23.2 | 30.3 | 16.3 | 9.8 | 0.5 | 3.7 | 10.6 | 5.6 | 0.0 | 0.0 | 0.0 | 100.0 |
| 17 | 23.0 | 29.2 | 16.2 | 9.7 | 0.5 | 4.4 | 10.6 | 6.4 | 0.0 | 0.0 | 0.0 | 100.0 |
| 18 | 22.7 | 29.0 | 16.1 | 9.7 | 0.5 | 4.4 | 10.5 | 7.2 | 0.0 | 0.0 | 0.0 | 100.0 |
| 19 | 22.4 | 28.8 | 16.0 | 9.6 | 0.5 | 4.4 | 10.4 | 7.9 | 0.0 | 0.0 | 0.0 | 100.0 |
| 20 | 22.8 | 29.2 | 16.2 | 9.7 | 0.5 | 4.6 | 10.6 | 6.4 | 0.0 | 0.0 | 0.0 | 100.0 |
| 21 | 22.9 | 29.3 | 16.3 | 9.8 | 0.5 | 4.7 | 10.6 | 5.6 | 0.0 | 0.5 | 0.0 | 100.0 |
| 22 | 22.9 | 30.3 | 14.1 | 9.7 | 0.5 | 4.0 | 10.6 | 5.6 | 0.0 | 1.0 | 1.4 | 100.0 |
| 23 | 23.2 | 30.7 | 12.1 | 9.9 | 0.5 | 4.5 | 10.7 | 5.6 | 0.0 | 0.0 | 2.7 | 100.0 |
| 24 | 23.4 | 30.9 | 10.0 | 10.0 | 0.5 | 4.5 | 10.8 | 5.7 | 0.0 | 0.0 | 4.1 | 100.0 |
| 25 | 19.42 | 29.98 | 16.68 | 10.3 | 0.43 | 4.25 | 10.16 | 5.33 | 3.46 | 0.0 | 0.0 | 100.0 |
| 26 | 19.67 | 30.05 | 16.72 | 9.38 | 0.52 | 4.26 | 10.19 | 5.88 | 3.33 | 0.0 | 0.0 | 100.0 |
| 27 | 19.92 | 30.13 | 16.76 | 8.47 | 0.6 | 4.27 | 10.22 | 6.43 | 3.2 | 0.0 | 0.0 | 100.0 |
| 28 | 22.72 | 29.54 | 15.34 | 9.15 | 0.72 | 5.51 | 10.68 | 5.61 | 0.73 | 0.0 | 0.0 | 100.0 |
| 29 | 22.69 | 29.5 | 15.31 | 8.84 | 0.72 | 5.95 | 10.67 | 5.6 | 0.73 | 0.0 | 0.0 | 100.0 |
| 30 | 22.65 | 29.45 | 15.29 | 8.53 | 0.72 | 6.39 | 10.65 | 5.59 | 0.72 | 0.0 | 0.0 | 100.0 |
| 31 | 19.06 | 30.05 | 16.71 | 10.32 | 0.6 | 4.26 | 10.19 | 5.35 | 3.46 | 0.0 | 0.0 | 100.0 |
| 32 | 19.31 | 30.12 | 16.76 | 9.41 | 0.69 | 4.27 | 10.21 | 5.89 | 3.33 | 0.0 | 0.0 | 100.0 |
| 33 | 19.56 | 30.2 | 16.8 | 8.49 | 0.78 | 4.28 | 10.24 | 6.45 | 3.2 | 0.0 | 0.0 | 100.0 |
| 34 | 19.24 | 30.01 | 16.7 | 10.31 | 0.52 | 4.26 | 10.18 | 5.34 | 3.46 | 0.0 | 0.0 | 100.0 |
| 35 | 20.01 | 30.27 | 16.31 | 10.16 | 0.52 | 4.29 | 10.26 | 5.38 | 2.79 | 0.0 | 0.0 | 100.0 |
| 36 | 20.79 | 30.53 | 15.92 | 10.01 | 0.52 | 4.33 | 10.35 | 5.43 | 2.11 | 0.0 | 0.0 | 100.0 |
| 37 | 19.47 | 30.06 | 16.72 | 10.32 | 0.52 | 4.26 | 10.19 | 5.35 | 3.12 | 0.0 | 0.0 | 100.0 |
| 38 | 20.24 | 30.31 | 16.34 | 10.17 | 0.52 | 4.3 | 10.28 | 5.39 | 2.45 | 0.0 | 0.0 | 100.0 |
| 39 | 21.03 | 30.57 | 15.95 | 10.02 | 0.53 | 4.34 | 10.37 | 5.44 | 1.76 | 0.0 | 0.0 | 100.0 |
| Ex. = Example | | | | | | | | | | | | |

Tables 2-1 and 2-2 show properties of these optical glasses. As shown in Tables 2-1 and 2-2, the optical glasses exhibited a refractive index (nd) of 1.81697 to 1.82796, an Abbe's number (vd) of 41.77 to 43.11, a glass transition temperature (Tg) of 586 to 598°C, a sag temperature (Ts) of 630 to 647°C, a liquidus temperature (LT) of 990 to 1,030°C, a viscosity of 5 to 9 dPa·s at a liquidus temperature and a specific gravity in the range of 4.868 to 5.051.

**Table 2-1**

| Example | nd | ν d | Glass transition temperature (°C) | Sag temperature (°C) |
|---|---|---|---|---|
| 1 | 1.81833 | 43.02 | 593 | 640 |
| 2 | 1.81697 | 43.11 | 590 | 638 |
| 3 | 1.81719 | 42.91 | 587 | 633 |
| 4 | 1.8212 | 42.59 | 587 | 633 |
| 5 | 1.82468 | 42.26 | 588 | 633 |
| 6 | 1.82796 | 41.96 | 591 | 635 |
| 7 | 1.8184 | 42.78 | 592 | 637 |
| 8 | 1.81869 | 42.81 | 586 | 630 |
| 9 | 1.81986 | 42.74 | 586 | 632 |
| 10 | 1.82099 | 42.67 | 586 | 634 |
| 11 | 1.82033 | 42.94 | 591 | 636 |
| 12 | 1.82085 | 42.93 | 593 | 639 |
| 13 | 1.82161 | 42.81 | 595 | 640 |
| 14 | 1.82322 | 42.83 | 593 | 638 |
| 15 | 1.82043 | 42.86 | 593 | 638 |
| 16 | 1.81965 | 43.02 | 592 | 637 |
| 17 | 1.82253 | 42.46 | 592 | 638 |
| 18 | 1.82456 | 42.15 | 592 | 638 |
| 19 | 1.8268 | 41.77 | 591 | 638 |
| 20 | 1.82535 | 42.15 | 594 | 638 |
| 21 | 1.82655 | 42.17 | 593 | 638 |
| 22 | 1.82237 | 42.85 | 593 | 640 |
| 23 | 1.82094 | 42.77 | 594 | 637 |
| 24 | 1.81963 | 42.86 | 594 | 637 |
| 25 | 1.82247 | 42.74 | 597 | 645 |
| 26 | 1.82256 | 42.59 | 598 | 646 |
| 27 | 1.82226 | 42.56 | 598 | 647 |
| 28 | 1.82052 | 42.73 | 590 | 637 |
| 29 | 1.82209 | 42.57 | 590 | 637 |
| 30 | 1.82325 | 42.52 | 592 | 639 |
| 31 | 1.82343 | 42.64 | 593 | 642 |
| 32 | 1.82331 | 42.5 | 591 | 640 |
| 33 | 1.82298 | 42.42 | 591 | 641 |
| 34 | 1.82247 | 42.7 | 596 | 645 |
| 35 | 1.82256 | 42.66 | 593 | 642 |
| 36 | 1.82225 | 42.78 | 593 | 640 |
| 37 | 1.82335 | 42.63 | 595 | 644 |
| 38 | 1.82632 | 42.5 | 593 | 639 |
| 39 | 1.82267 | 42.69 | 594 | 642 |

**Table 2-2**

| Example | Liquidus temperature (°C) | Viscosity (dPa·s) at liquidus temperature | Specific gravity |
|---|---|---|---|
| 1 | 1010 | 6 | 4.938 |
| 2 | 1020 | 5 | 4.923 |
| 3 | 990 | 8 | 4.921 |
| 4 | 1010 | 6 | 4.967 |
| 5 | 1020 | 5 | 5.012 |
| 6 | 1030 | 5 | 5.051 |
| 7 | 990 | 8 | 4.937 |
| 8 | 1000 | 7 | 4.941 |
| 9 | 1010 | 6 | 4.954 |
| 10 | 1020 | 6 | 4.965 |
| 11 | 1010 | 6 | 4.961 |
| 12 | 1010 | 6 | 4.972 |
| 13 | 1010 | 6 | 4.981 |
| 14 | 1010 | 6 | 4.984 |
| 15 | 1000 | 7 | 4.963 |
| 16 | 1010 | 6 | 4.974 |
| 17 | 1000 | 7 | 4.982 |
| 18 | 1000 | 7 | 5.002 |
| 19 | 1000 | 7 | 5.021 |
| 20 | 1010 | 6 | 4.985 |
| 21 | 1020 | 5 | 4.964 |
| 22 | 1000 | 7 | 4.955 |
| 23 | 1000 | 7 | 4.914 |
| 24 | 990 | 9 | 4.868 |
| 25 | 1010 | 9 | 5.02 |
| 26 | 1010 | 9 | 5.01 |
| 27 | 1010 | 9 | 5 |
| 28 | 1030 | 5 | 4.94 |
| 29 | 1030 | 5 | 4.94 |
| 30 | 1030 | 5 | 4.94 |
| 31 | 1020 | 6 | 5.02 |
| 32 | 1020 | 6 | 5.02 |
| 33 | 1020 | 6 | 5.01 |
| 34 | 1010 | 9 | 5.01 |
| 35 | 1010 | 8 | 5 |
| 36 | 1010 | 7 | 4.99 |
| 37 | 1020 | 7 | 5.02 |
| 38 | 1020 | 6 | 5.04 |
| 39 | 1010 | 5 | 5 |

A molten glass maintained at 1,050 to 1,450°C (corresponding to a glass viscosity of 3 to 0.05 dPa·s) in the above mentioned electric furnace was caused to continuously flow downward from a platinum pipe that is temperature-adjusted to 1,050°C (corresponding to a glass viscosity of 4 dPa·s) at a constant rate, the forward end of the molten glass flow was received with a glass preform shaping mold, and the shaping mold was moved downward at a speed sufficiently greater than the speed of the molten glass flow flowing downward, in such a timing that a molten glass gob having a predetermined weight was separated from the above forward end. When molten glass drops were dropped, each glass had a viscosity of 7 dPa^{·}s.

While such a molten glass gob was caused to float by applying gas pressure in the above shaping mold, it was shaped into a spherical preform and annealed. The weight of the glass preform was set in the range of 0.01 to 5 g. The weights of molten glass gobs were equivalent to the weights of the corresponding glass preforms, and the thus-obtained glass preforms had a weight accuracy of within ±1 % based on the predetermined weights.

All surfaces of each of the thus-produced glass preforms were formed by solidification of a molten glass, and they were free surfaces. Further, defects such as striae, devitrification, a cracking (breaking), bubbles, etc., were not found on each surface and inside each glass.

### Example 40

Each of the glass preforms obtained in the above Examples 1 to 39 was separately introduced into a press mold having a molding surface provided with a carbon-containing film (diamond-like carbon), and the glass preform and the press mold were heated together up to a temperature at which the glass had a viscosity of 10⁵ to 10⁹ dPa^{·}s. The glass preform was precision press-molded with the press mold in a nitrogen atmosphere at a pressure of 5 to 15 MPa for a pressing time period of 10 to 300 seconds. The thus-obtained precision press-molded product was annealed to give an aspherical lens. The obtained lens had a refractive index (nd) and an Abbe's number (vd) equivalent to those values of the corresponding optical glass forming the above glass preform.
According to the above method, the form of a press mold and the weight of a glass preform were determined as required, and optical elements such as various lenses including a spherical lens, a microlens and a lens array and a lens with diffraction grating, a diffraction grating, a prism, a prism with a lens and a polygon mirror were produced in each of Examples. The thus-obtained optical elements had sufficiently high form accuracy, and no defect was found inside and on the surface of each optical element.

### Example 41

Each of the glass preforms in Examples 1 to 39 was pre-heated to a temperature at which the glass exhibited a viscosity of 10⁴ to 10⁸ and introduced into a press mold made of SiC, which was pre-heated to a temperature lower than the above pre-heating temperature and had a molding surface provided with a carbon-containing film (diamond-like carbon film). The glass preform was precision press-molded with the press mold in a nitrogen atmosphere at a pressure of 5 to 15 MPa for a pressing time period of 10 to 300 seconds.
The thus-obtained precision press-molded product was annealed to give an aspherical lens. The obtained lens had a refractive index (nd) and an Abbe's number (vd) equivalent to those values of the corresponding optical glass forming the above glass preform.
According to the above method, the form of a press mold and the weight of a glass preform were determined as required, and optical elements such as various lenses including a spherical lens, a microlens and a lens array and a lens with diffraction grating, a diffraction grating, a prism, a prism with a lens and a polygon mirror were produced in each of Examples. The thus-obtained optical elements had sufficiently high form accuracy, and no defect was found inside and on the surface of each optical element.

### Industrial Utility

The use of the precision press-molding glass preform, provided by the present invention, enables the easy and efficient production of an optical element having high-refractivity low-dispersion properties, and the above optical element can be suitably used in an optical machine or device enhanced in the degrees of integration and function, such as a digital camera, or the like.

## Claims

1. A precision press-molding glass preform, which is formed of an optical glass comprising, by mol%, 40 to 60 % of B₂O₃ exclusive of 40 %, 5 to 25 % of La₂O₃, 2 to 22 % of Gd₂O₃, 5 to 45 % of ZnO and 0 to 10 % of SiO₂ exclusive of 10 % as glass components but containing no PbO, wherein the ratio of the content of B₂O₃ to the total content of B₂O₃ and SiO₂ (B₂O₃/(B₂O₃+SiO₂)) is over 0.84 but not more than 1.00, and the ratio of the content of Gd₂O₃ to the total content of Gd₂O₃ and Nb₂O₅ as an optional component (Gd₂O₃/(Gd₂O₃+Nb₂O₅)) is over 0.91 but not more than 1.00, the optical glass having a refractive index (nd) of over 1.80 but not more than 2.00 and an Abbe's number (vd) of 40 to 45 exclusive of 45.

2. The precision press-molding glass preform as recited in claim 1, wherein the optical glass further contains, by mol%, 0.5 to 15 % of Li₂O, the total content of Li₂O and the ZnO being at least 10 %, 0.5 to 10 % of ZrO₂, 0.2 to 10 % of Ta₂O₅, 0 to 10 % of WO₃, 0 to 4 % of Y₂O₃ and 0 to 0.5 % of Yb₂O₃, and La₂O₃ and Gd₂O₃ have a total content of 12 % or more.

3. The precision press-molding glass preform as recited in claim 1, wherein the ratio of the content of SiO₂ to the total content of B₂O₃ and SiO₂ (SiO₂/(B₂O₃+SiO₂)) is not less than 0 but less than 0.16, and the ratio of the content of Nb₂O₅ to the total content of Gd₂O₃ and Nb₂O₅ (Nb₂O₅/(Gd₂O₃+Nb₂O₅)) is not less than 0 but less than 0.09.

4. The precision press-molding glass preform as recited in claim 1, wherein the optical glass has a glass transition temperature of 650°C or lower.

5. The precision press-molding glass preform as recited in claim 1, wherein the optical glass has a viscosity of 4 to 40 dPa^{·}s at a liquidus temperature thereof.

6. The precision press-molding glass preform as recited in claim 1, which has all surfaces formed by solidification of the optical glass in a molten state.

7. The precision press-molding glass preform as recited in claim 1, which has all surfaces formed of free surfaces.

8. A process for producing the precision press-molding glass preform recited in claim 1, which comprises separating a molten glass gob having a predetermined weight from a molten glass and cooling the glass gob to produce the precision press-molding glass preform, the glass preform having a weight equivalent to the predetermined weight of the glass gob.

9. An process for producing a precision press-molding glass preform as recited in claim 8, wherein the glass preform is shaped while the molten glass gob is caused to float by applying a gas pressure to the molten glass gob.

10. An optical element that is a product obtained by heating the precision press-molding glass preform recited in claim 1 and precision-press-molding the glass preform.

11. The optical element that is a product obtained by heating the precision press-molding glass preform produced by the process recited in claim 8 and precision-press-molding the glass preform.

12. A process for producing an optical element, which comprises heating the precision press-molding glass preform recited in claim 1 and precision-press-molding the glass preform.

13. A process for producing an optical element, which comprises heating the precision press-molding glass preform produced by the process recited in claim 8 and precision-press-molding the glass preform.

14. The process for producing an optical element as recited in claim 12 or 13, wherein the precision press-molding glass preform is introduced into a press mold and the precision press-molding glass preform is heated together with the press mold and precision press-molded.

15. The process for producing an optical element as recited in claim 12 or 13, wherein the precision press-molding glass preform preheated to have a higher temperature than the press mold is introduced to the press mold and then precision press-molded.
